# EUROPEAN PATENT SPECIFICATION

(11) **EP 0 493 885 B1**
(45) Date of publication and mention of the grant of the patent: **27.03.1996**
(21) Application number: 91310965.8
(22) Date of filing: 27.11.1991
(51) Int. Cl.: G11B 5/60, G11B 21/21

(54) **Slider units for information recording devices and methods of making them**
Gleitkörpervorrichtungen für Datenaufzeichnungsgeräte und Verfahren zu deren Herstellung
Dispositifs comprenant un patin pour appareils d'enregistrement de données, et leurs méthodes de fabrication

(30) Priority: 01.12.1990 JP 400092/90
(43) Date of publication of application: 08.07.1992
(73) Proprietor: HITACHI, LTD., Chiyoda-ku, Tokyo 100 (JP)
(72) Inventor: Harada, Takeshi, Toride-shi, Ibaraki 302 (JP); Kanamaru, Masatoshi, Chiyoda-mura, Niihari-gun, Ibaraki 315 (JP); Hosogane, Atsushi, Chiyoda-mura, Niihari-gun, Ibaraki 315 (JP); Kohno, Akiomi, Nishiibaraki-gun, Ibaraki 309-17 (JP); Mori, Kenji, Tsuchiura-shi, Ibaraki 300 (JP)
(74) Representative: Stoner, Gerard Patrick

(56) References cited:
- US-A- 4 605 977
- US-A- 4 853 810
- US-A- 4 853 810
- PATENT ABSTRACTS OF JAPAN vol. 7, no. 228 (P-228)8 October 1983
- PATENT ABSTRACTS OF JAPAN vol. 14, no. 345 (P-1083)26 July 1990
- PATENT ABSTRACTS OF JAPAN vol. 7, no. 067 (P-184)19 March 1983
- PATENT ABSTRACTS OF JAPAN vol. 14, no. 88 (P-1008)19 February 1990

## Description

This invention relates to slider units which are used to carry a recording or reproducing head at the surface of an information recording medium such as a disc. In other particular aspects it relates to methods of making such slider units, and to their use in information recording or reproducing devices.

The concept of head-carrying slider units which float in near-contact against a disc surface, subject to a lift force generated by frictional air movement due to the relative movement of slider and disc, is well known from the prior art. They have been applied in information recording or reproducing devices for use e.g. as external memory for information processing apparatus such as computers and word processors. A recording medium used is typically a magnetic or optical disc, although other media may also be used.

A typical slider unit for carrying the recording or reproducing head - typically a magnetic head or optical head - is formed with an air bearing structure on that side which faces the medium in use (hereinafter called the "float side"). Air passing between the float side and the medium generates a lift force on the slider unit. Usually the slider unit is mounted at the end of an arm which can exert a force towards the medium to counterbalance the lift force, to achieve a stable floating condition with a small gap (referred to hereinafter as the "flying height") between the slider unit and the medium surface.

It is generally recognized that the flying height should be kept as small as possible, indeed approaching zero, so as to maximize the information density that can be recorded on/reproduced from the information medium. For example, the flux from a magnetic recording or reproducing head diverges away from the head and so the necessary area for one bit of information increases with increasing distance of the head from the medium. Accordingly, various proposals have been made to reduce the flying height to distances of the order of a few tens of microns (µm) and less.

The technical problem of controlling the flying height under these conditions is extreme. A typical slider unit may weigh several tens of mg and must be supported at an infinitesimal spacing from a fast-moving medium e.g. a disc rotating at several thousand rpm. Furthermore, the variation in this tiny spacing must be rigorously minimized.

The prior art contains a number of proposals for reducing and stabilizing the flying height.

JP-A-63/94479 describes a piezoelectric actuator for exerting a controllable downward force at the supported end of the load arm on which the slider unit is mounted. A sensor determines the flying height of the slider unit and the piezoelectric element responds to variations therein with a correcting force on the load arm. However the response is found to be slow, and the controllability of flying height variation is therefore poor.

JP-A-62/167681 describes a slider unit having a cavity on the float side between the "rails" for generating the positive lift. A metal or plastic insert between the rails has a thin limb on which a sub-slider including the head is mounted. The sub-slider is thus freed from the inertia of the main slider, and its flying height controlled either by selection of the springiness of the thin limb, or by making the thin limb a piezoelectric actuator whose angle can be adjusted in response to a flying height measured from the sub-slider. We have found that it is very difficult to keep the flying height to a steady level using such a construction.

Both the above sliders are "positive pressure sliders" in which the force generated at the float slide predominantly pushes the slider away from the medium surface. "Negative pressure" sliders have also been proposed, in which the slider conformation also produces a negative lift component towards the medium surface. Usually this is done by having a recessed section of the float side into which air passing the float side expands e.g. past a rearwardly-facing step on the float side. The recess is usually provided between side rails which generate the positive lift component. The negative component produces a tendency towards the medium surface at the slider unit itself and hence a better response characteristic. It is preferable when very high information recording density is sought. The downward force applied to the load arm can be reduced, which extends the life of the medium and slider particularly in a "contact start or stop" type in which the slider rests against the medium when not operating. In a non-contact start and stop type, the negative pressure component can improve the "self-loading" i.e. the initial approach movement made by the slider unit towards the medium surface and a steady floating state.

JP-A-60/223088 describes a slider having a negative pressure generating recess. Control is proposed using a vent hole bored through from the negative pressure pocket to the top surface of the slider, and a piezoelectric flap lying over the top surface of the vent hole. Piezoelectric control of the flap acts like a valve on the vent hole and regulates the negative pressure and hence flying height. In an alternative proposal, a transverse rail forming a step at the front of the negative pressure generating recess is made of piezoelectric material so that its height can be adjusted to adjust the negative lift.

US-A-4853810 describes a slider unit having a special tunneling electrode adjacent the head, seeking to achieve a very fine control of flying height at the head. Figure 6 of this document shows schematically an aerodynamic wing on the slider unit, which it is suggested could be made by microfabrication technology. However no information is given about the actual manufacture of this wing, its shape, control or position on the slider unit. No possible implementation of microfabrication is proposed.

It is generally true of the above documents that they do not consider the manufacturing methods that can be used to make the various control devices proposed. It is important to consider that the body of the slider unit is typically made of a hard ceramics material such as zirconia because the surfaces thereof which may contact the recording medium must be very hard and flat. These materials are difficult to machine and it is difficult to bond parts to them, particularly small parts.

A first problem addressed by the present invention is to provide a novel construction of slider unit. A second problem addressed is to provide the construction so that it can be mass-produced relatively easily while still enabling control of flying height. A further problem addressed is that of providing new production methods for such slider units.

According to the invention, a mechanism, device for conformation for controlling flying height is formed in an integrated manner on a piece of semiconductive material e.g. silicon or photosensitive glass. Choice of materials susceptible to microfabrication enables this to be done easily using e.g. deposition and etching techniques of a known nature, and also makes possible the mass production of many such devices on a wafer of the material. The piece of semiconductive material incorporating the lift adjusting formation is then fixed to another part or parts to make up the slider body with the semiconductive substrate piece comprised therein.

In one specific aspect, the invention provides a slider unit comprising a slider body and a recording or reproducing head, for floating operation at the surface of an information recording medium moving relative thereto, having a float side which faces the surface of the medium in use, whereby air movement between a float side of the slider unit and the surface of the medium causes a lift force on the slider unit, said slider unit further comprising an aerodynamic element which can be moved in a controllable fashion to adjust the lift force on the slider unit in response to information from a flying height sensor characterized in that
the slider body also comprises an insert portion of semiconductive material, which is shaped so as to provide the said controllably movable aerodynamic element.

Preferably, a sensor for measuring the flying height is also comprised in the slider unit e.g. on the slider body.

One preferred application of the technique is in a negative pressure slider in which the slider body has a recess on the float side as described above. This recess can be formed partially or entirely in the insert portion of semiconductor substrate material thus facilitating its formation. For example, the insert portion of semiconductive material may be formed with a step which is at one limit e.g. the forward end of the negative pressure generating recess. Side limits of the recess may likewise be formed in the insert portion of semiconductive material, or they may be defined in the assembled slider body by side portions of the basic body material (usually ceramics) which project towards the float side. Typically these are side rails having float side surfaces for generating positive lift force.

A variety of controllably movable aerodynamic elements may be provided for adjusting the lift, using the easier fabrication afforded by the use of the insert portion of semiconductive substrate. In one version, a slider unit having a negative pressure generating recess as described also has a vent communicating from the recess on the float side to the exterior at another part of the slider body e.g. the opposite side.

A valve member for controlling flow through the vent is provided by being formed on the insert portion of semiconductor substrate. The valve member may be a bridge or cantilever layer, extending over an opening of the vent so that it can wholly or partially close it off, preferably on the float side. Such valve members may be formed on the insert portion of semiconductive substrate by a deposition and etching technique in a known manner. To enable its control by electrical means, it may be a multi-layer construction forming a piezoelectric or electrostatic actuator.

To reduce disturbance of air flow, such a valve member may itself be recessed into the surface of the semiconductive insert at the vent opening. It may be then substantially flush with the surrounding surface.

There are various ways in which a microfabricated controllably movable layer construction of the semiconductive substrate can be used to adjust the lift.

Another possibility is a controllably movable wing or vane on the insert portion of semiconductive substrate. Again, this is preferably provided on the float side and may be associated with a negative lift generating recess. It may enable variation of the negative pressure generated by the recess e.g. by enabling variation of the height of a step at the front of the recess. Alternatively or additionally, it may itself be able to generate a positive lift component by being positioned towards the rear of a negative pressure generating recess, or at some other portion of a slider.

The slider unit may comprise a ceramics portion with a central part and side rails which extend longitudinally along opposite edges of the central part and project to the float side, with an insert portion of semiconductive material which is shaped on the float side to provide the controllably movable aerodynamic element, said insert portion being fixedly bonded to the ceramics portion on the float side of the ceramics portion between the side rails thereof, the float side surface of the fixed semiconductive insert portion being provided with at least one integrally formed and etched controllably movable aerodynamic element for adjusting the lift force.

Accordingly, a generally conventional slider conformation having a main ceramics substrate with a central part and side rails can complement an insert portion of semiconductive material formed in accordance with the above teachings, to provide a composite construction in which the hardness of the ceramics material provides the desired properties at the extremities on the float side, while the susceptibility of the insert portion of semiconductive material to microfabrication enables the provision of sophisticated controllably movable aerodynamic elements for adjusting the lift force.

The ceramics portion may be e.g. zirconia, titania or alumina based ceramics.

A slider unit according to any one of the aspects explained above may be mounted on an arm of an information recording or reproducing device, in a manner which is generally conventional. Such an information recording or reproducing device is provided as a further aspect of the invention.

In another aspect, we provide a method of making a slider unit which has a slider body and a recording or reproducing head, for floating operation at the surface of an information recording medium moving relative thereto, having a float side which faces the surface medium in use, whereby air flow between a float side of the slider unit and the medium causes a lift force on the slider unit, said slider unit further comprising an aerodynamic element which can be moved in a controllable fashion to adjust said lift force in response to information from a flying-height sensor;
the method being characterised by forming the controllably movable aerodynamic element by steps on a semiconductive substrate and fixing the semiconductive substrate to a base substrate to form the slider body.

As has been explained, this method is susceptible of implementation by using conventional microfabrication techniques such as thin-film deposition, fine pattern exposing, and forming using anisotropic and/or isotropic etching techniques. A skilled man will know how to use these techniques to make e.g. piezoelectric and electrostatic actuators in the form of movable flaps or bridges on a semiconductive substrate.

Similarly, the formation of steps and/or other recesses in the surface of such a semiconductive substrate is a straightforward matter using conventional etching/masking methods.

Most desirably, the method is implemented in a mass-production regime. In this respect, we provide a method of making a plurality of slider units each made according to any of the above techniques, the method comprising forming an array of the said controllably movable aerodynamic elements on a parent piece of semiconductive material;
sub-dividing the parent piece into a plurality of substrate portions of semiconductive material, each having a controllably moveable aerodynamic element, and fixing the respective portions of semiconductive material to respective base substrates to make the said slider bodies.

The base substrates, usually made from ceramics material, can be formed by forming an array of recording or reproducing heads on a parent piece of base substrate material;
sub-dividing the parent piece into a plurality of portions of base substrate material, and
shaping the portions into base substrates.

As described above, the controllably movable aerodynamic element may comprise a piezoelectric unimorph or bimorph, or an electrostatic actuator.

To fix the semiconductive substrate to the base substrate, which is usually of a ceramics material, methods such as brazing or anode bonding may be used. It is preferable that the bonding temperature be 250°C or lower. Inorganic or metallic material may be used for bonding.

It will be appreciated that the method as described can avoid the need for carrying out complex shape-forming on a relatively unmachinable material such as zirconia ceramics. Furthermore, since the delicate controllably movable aerodynamic element can be formed by microfabrication techniques which are well adapted to forming micro-scale formations, but can be made on a semiconductive substrate of significant size which is easily handleable, it is no longer necessary to bond a very small aerodynamic adjustment or control mechanism to a ceramic slider body. The bonded part and its bonding surface can be larger and simpler than previously proposed, making assembly more easy.

The preferred flying height may be as little as 0.1 µm or less, even as low as 0.05 µm or less. At 0.1 µm, it should be possible to achieve an information recording density of 5 x 10⁵ bits/mm, and so preferably an information recording density of at least this value is achieved.

Embodiments of the invention are now described by way of example, with reference to the accompanying drawings in which:
Figure 1 is a schematic view of an information recording or reproducing device comprising a slider unit;
Figure 2 is a longitudinal cross-section at A-A' of the slider unit shown in Figure 1, showing a general construction of the body thereof;
Figure 3 is a perspective view in detail of the float side of a first embodiment of the slider;
Figure 4 is a longitudinal section through an electrostatically-actuated valve for adjusting the flow through the vent of the Figure 3 embodiment in a controllable fashion;
Figure 5 is a corresponding cross-section of a variant using a piezoelectric actuator;
Figure 6 shows a second embodiment using a cantilevered control valve, with part of the slider body sectioned for clarity;
Figure 7 shows in longitudinal cross-section the cantilevered control valve of the second embodiment, using an electrostatic actuator;
Figure 8 shows a variant using a piezoelectric actuator;
Figure 9 is a perspective view of the float side of a third embodiment of slider unit using a controllably movable wing to vary a negative lift component, the view being partly transversely and longitudinally sectioned for clarity;
Figures 10 and 11 show constructions for such a movable wing using an electrostatic actuator and a piezoelectric actuator respectively;
Figure 12 is a view corresponding to Figure 9, of a fourth embodiment using a movable wing for generating a positive lift component, and
Figures 13 to 15 show steps in a method embodiment wherein Figure 13 shows preparation of ceramics base substrates, Figure 14 shows preparation of semiconductor inserts, and Figure 15 illustrates assembly of the base substrates and semiconductive inserts.

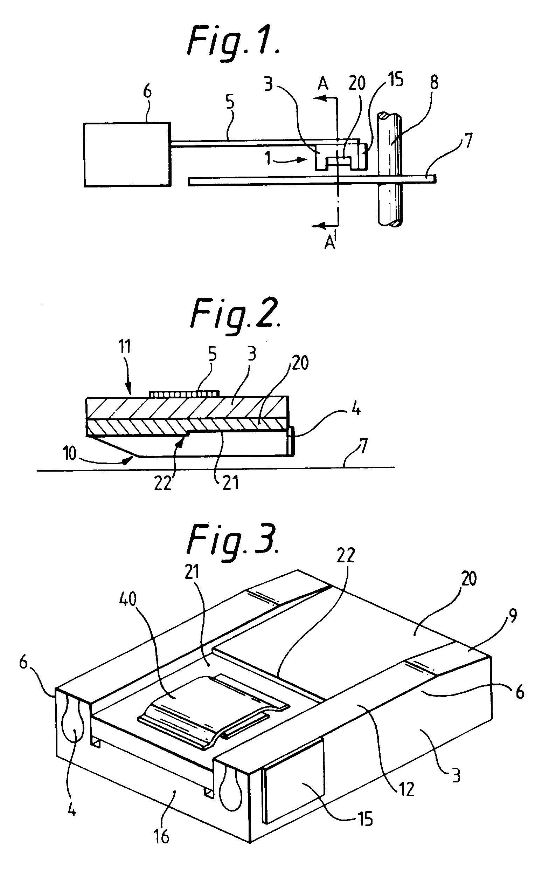

With reference to Figure 1, an information storage and retrieval device comprises a negative pressure slider 1 supported by a load arm 5 over the surface of a magnetic or optical disc 7. The disc 7 is mounted rotatably on a driving shaft 8. Radial positioning of the slider 1 relative to the disc is done in a conventional manner by an actuator 6 such as a voice coil motor or a piezoelectric element.

When the disc 7 is rotating at operational speed, air carried along by frictional engagement with its surface passes between that surface and the slider 1, generating a lift force between them which holds the slider floating above the disc surface.

Figure 2 shows the general shape of the slider body 1 in longitudinal cross-section. The end of cantilevered load arm 5 is seen, fixed to the top surface of the slider body. The bottom or float surface 10 of the slider body has a general conformation which can be seen in more detail from Fig. 3 which shows the slider body inverted.

The body consists essentially of a ceramics main body 3 e.g. of zirconia based ceramics, having a general downward-facing channel shape, and an insert substrate 20 made of silicon which is fixed in the channel opening of the main body 3. More specifically, the main body 3 comprises a flat central portion 16 with integral downwardly-projecting rail portions 6 extending along each side thereof for substantially the full length of the body. The downwardly-facing surface 12 of each rail 6 is machined very flat and smooth, and forms a positive lift-generating surface for the body. At its front end, each surface 12 has a forwardly and upwardly inclined portion to assist in generating the lift force.

At the rear end of each of the side rails, a recording or reproducing head 4 is integrally formed. In this embodiment, each head 4 is a magnetic head whose construction is conventional in this art and need not be described further. The head extends, as again is conventional, to the lowermost extremity of the rail 6 of the float side, so as to be as near as possible to the recording medium in operation.

The semiconductor insert 20 occupies the full width of the channel formed between the two rails 6. It also extends the full length of the slider body. In the embodiment shown it is a rectangular piece having a flat upper surface bonded to the opposing flat surface of the main body centre 16 by anode bonding. A brazing or soldering fixing may be used. The lower surface of the insert 20, on the float side, is also generally flat but has a substantial recessed portion 21 at its rear part, occupying about half its length, creating a transverse perpendicular step 22 in its middle region. The step may appear towards the forward end of the slider if desired. In operation, air passing between the slider float side and the medium surface, and between the rails 6, expands upwardly into the recess 21 as it passes the transverse step 22, causing a reduction in the pressure of the air and a downward force component at this part of the slider.

A flying height sensor 15 is attached to a side surface of the slider body. This is a measuring instrument which may be, for example, of a capacitance detection, optical or ultrasonic type. Such sensors and their construction are known to the man skilled in the art. In this context, the use of a very small integrated-type measuring instrument manufactured using semiconductor fabrication technology is preferred.

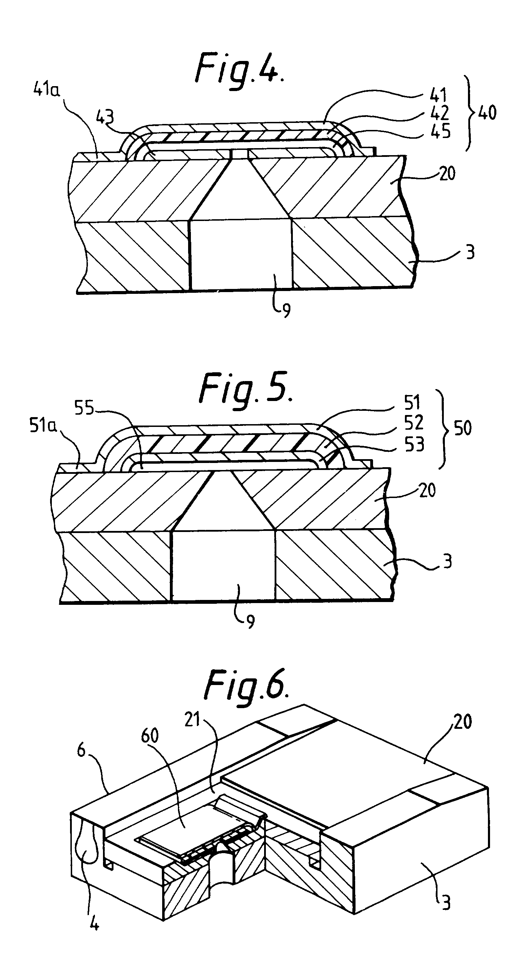

An aerodynamic element for effecting controlled and adjustable variation of the lift force is provided on the semiconductor insert 20, and a first embodiment of such an element is described with specific reference to Figs. 3 and 4.

A cylindrical vent hole 9 is formed through the central layer 16 of the ceramics body 3, downwardly from the top surface 11 thereof, and is in register with a corresponding hole through the semiconductor insert 20 formed generally in the centre of its recess region 21. Through the semiconductor layer 20, vent hole 9 tapers to a small opening at the float side.

A control microvalve 40 is formed on the surface of the semiconductor insert 20 at the opening of the vent 9.

Microvalve 40 comprises a flat layer of an electrostatic actuator, spaced a short distance above the opening of the vent 9. Figure 4 shows the construction in more detail. The actuator has a bridge structure rooted on opposite sides of the vent opening, with a fixed electrode layer 43 deposited around the end opening and having a corresponding hole, and a movable layer spaced above the fixed electrode 43 by a thin laminar gap 45 and comprising an insulating layer 42 on the inside and a further electrode layer 41 on the outside. Each of these layers, and the gap, is preferably 1 to 10 µm thick. The electrodes 41,43 are preferably thin films of metals or sufficiently conductive semiconductive materials e.g. Al, Ag, Au, Ti or Si. The movable insulating layer 42 is preferably of a ceramics-type layer e.g. SiO₂, Si₃N₄, Al₂O₃ or plastics e.g. polyimide.

These thin films are made by sputtering, evaporation, chemical vapor deposition (CVD) or plating techniques. Then, they are subjected to light exposure and etching processes to create the desired pattern. These techniques are generally known and can be referred to as microfabrication techniques. The vent opening through the monocrystalline silicon insert 20 and fixed electrode 43 can be made by anisotropic etching. The gap 45 is created by the known technique of sacrificial etching in which a layer initially deposited is then removed by etching from the exposed edge thereof.

Lead wires are connected to the movable and fixed electrodes 41,43 by soldering or, more preferably, ultrasonic bonding. Figure 4 shows a connection location 41a for the movable electrode 41. These can then be connected to a DC supply installed on an external mount. DC voltage applied across the two electrodes causes an electrostatic attractive force between them and closes the opening to the vent 9 either completely or to a degree depending on the applied voltage. By closing the vent 9, the negative lift component generated by recess 21 is maximized. Consequently, microvalve 40 provides a means for controlling in a smoothly adjustable manner the exact amount of lift. It can be connected in a closed-loop feedback system including the sensor 15 so that a desired flying height is maintained in operation. That is, the flying height is monitored at all times by the sensor 15. If the flying height becomes larger than a predetermined reference height (for example 0.1 µm) deemed optimal for information recording or reproduction, a DC voltage initially applied across the microvalve electrodes 41,43 is reduced so that it ceases to close entirely the vent 9. The degree of voltage reduction is determined by the measured difference between the measured and pre-set flying heights. The resulting air flow in vent 9 influences the negative lift to the desired degree (which can be determined by calibration) and adjusts the flying height continuously towards the desired reference level. A control circuit connected to the DC supply enables the closed-loop control.

Figure 5 shows a variant form of microvalve 50. In this variant the vent 9 is formed as before, but the microvalve 50 is piezoelectrically actuated. It comprises a movable bridge made up of three layers formed on the monocrystalline silicon substrate 20 by microfabrication. A top electrode layer 51 and a bottom electrode layer 53 are separated by an intermediate layer 52 of piezoelectric material. All three layers are integrated in the bridge structure and there is no fixed layer.

The electrodes 51,53 are connected to a DC supply as with the Fig. 4 version, using e.g. electrode bonding pad 51a. Application of voltage between the electrodes distorts the piezoelectric layer 52 and the bridge can move across the laminar gap 55 to close off the opening of vent 9 to the desired degree. Closed-loop lift control can be performed as described above.

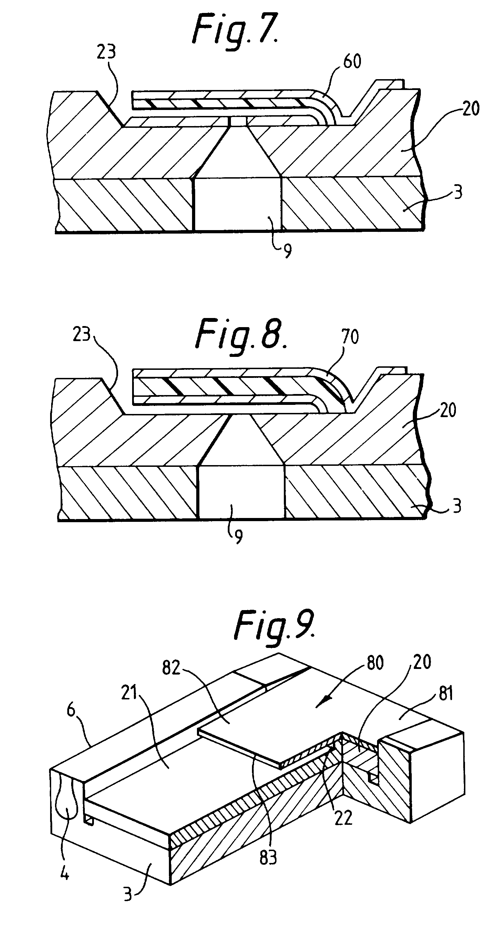

The second embodiment is described with reference to Figs. 6 and 7. The slider body 1 and vent 9 are generally similar to those described in the first embodiment. However the microvalve movable member is different, being supported only at one side so as to form a cantilever. The construction is shown in section in Fig. 6, and in more detail in Fig. 7 where it is seen that the cantilevered microvalve member 60 forms an electrostatic actuator in a manner analogous to the bridge of Fig. 4. The construction and operation of the cantilever actuator 60 are also analogous to the Fig. 4 embodiment, but the cantilever version may have a larger distortion for a given applied voltage. This may widen the adjustment range of the lifting force.

A further feature shown in this embodiment is a local recess 23 formed in the general surface of the large recess 21 in the semiconductor substrate 20. Local recess 23 is only slightly larger than, and the same thickness as, the electrostatic actuator which is formed in it in its rest condition. Consequently the microvalve actuator member 60 causes less disturbance of the air flow past the slider and this is preferable. The bridge embodiments of Figures 4 and 5 may similarly be formed in local recesses.

Figure 8 shows a variant analogous to Figure 5, in which the cantilevered microvalve member is a piezoelectric actuator 70, likewise formed in a local recess 23. The construction and operation of the piezoelectric actuator 70 are analogous to those described above.

Figure 9 shows a third embodiment, with longitudinal and transverse sections as in Fig. 6. The general construction of the slider body base 3 and semiconductor insert 20 are as before, except that the transverse step 22 of the insert 20 is displaced towards the front end i.e. about a quarter of the way back. Behind the step 22, the recessed insert surface 21 is flat. The lifting force adjusting mechanism is a movable wing 80 formed at the front of the slider body. This is formed by a generally rectangular deposited layer having an anchoring portion 81 at the front, covering the front non-recessed portion of the silicon insert 20, and a movable portion 82 extending rearwardly over the step 22 and at a narrow spacing above the surface of the recessed part 21. The free straight rear edge 83 of the wing terminates about half way along the slider.

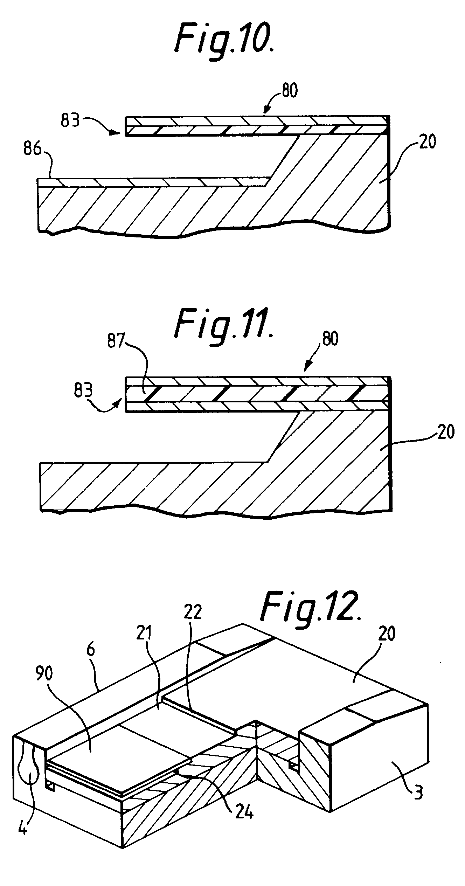

Figures 10 and 11 show how such a wing may be made as an electrostatic actuator (Fig. 10) or as a piezoelectric actuator (Fig. 11). The electrostatic actuator can have a fixed electrode 86 formed under the wing on the opposing surface of the recessed silicon substrate 20. The wing itself can comprise the usual lower insulating layer and upper electrode layer as before. Operation is analogous to that described previously.

Similarly, Fig. 11 shows a piezoelectric version in which the wing-forming layer 80 comprises a piezoelectric layer 87 sandwiched between two electrode layers.

The flat construction of the wing layer 80 can be formed very simply by well-known techniques.

In this embodiment, no vent is provided through the slider body. When the wing 80 is deflected by application of voltage, the effective depth of the recess 21, relative to air approaching it over the wing 80, changes. Negative lifting force is increased if the recess is deepened, and decreased if it is more shallow.

A fourth embodiment is shown in Figure 12, again with sections to clarify the structure. The slider body is generally as before. In this case, however, the silicon insert 20 is formed with two transverse steps. The main transverse step is as before, defining the recessed portion 21 over about half the area of the insert 20. An additional step 24 extends transversely across the insert 20 about half way back along the main recess 21, defining a more deeply-recessed portion. The lift adjusting member comprises a movable wing 90 projecting rearwardly from the second step 24 and having its free edge flush with the rear of the slider body, in register with heads 4. The wing 90 has a cantilever construction, spaced over the more deeply recessed portion, which can be formed in the same way as those shown in Figs. 10 and 11. By changing applied voltage to move the wing 90 up or down, lift can be adjusted. In particular, by moving the free end of the wing away from the slider body towards the passing medium, a positive lifting force can be obtained and adjusted that acts at or adjacent the rear end of the slider body.

Methods of making the slider units are now described in more detail.
(1) Information recording or reproducing heads 4 of a conventional type are formed in the appropriate end portions of a ceramic main body substrate of a slider material e.g. a ZrO₂/TiO₂-based ceramic material. The head-forming process can be conventional.
(2) The slider material with the formed heads 4 is then machined into a portion of base substrate 3 having the parts as shown in e.g. Fig. 3. The base substrate may be e.g. 2 to 4 mm long, 1.5 to 3 mm wide and 0.5 to 1 mm thick. If a venting adjustment is to be used, a vent hole is bored in the appropriate portion.
(3) A semiconductive substrate of silicon or photosensitive glass is provided with the desired lift modifying and adjusting components. For example, a recessed section 21 with its step 22 may be formed by anisotropic etching of monocrystalline silicon using e.g. a potassium hydroxide solution. An appropriate depth of recess may be 5 to 100 µm. By the etching method, a desired shape can be obtained with good precision and without the risk of forming fine cracks as would be likely to happen if machining methods such as cutting were used. A necessary air vent hole may be formed in a corresponding fashion. Microvalve and/or wing elements can be formed by the deposition/etching techniques described above. In particular, thin-film deposition methods such as sputtering, evaporation, CVD and plating, fine pattern exposure techniques, and anisotropic and isotropic etching techniques may be used.
(4) The semiconductor piece bearing the necessary controllably movable aerodynamic element for adjusting the lift force is cut to a chip about 2 to 4 mm long and 1 to 2 mm wide.
(5) The slider base substrate 3 and semiconductor chip 20 are bonded together to give the desired slider body with controllably movable aerodynamic element.

If a photosensitive glass is used for the insert part., anisotropic etching can be performed by UV irradiation of an exposed pattern which is to be etched. Irradiation causes a phase change rendering the exposed pattern vulnerable to wet etching giving the desired formation.

Bonding of the semiconductor and base substrates may be as follows. An In-Sn alloy is sandwiched between the base substrate and semiconductor insert under a pressure of 0.1 kgf/mm at a temperature below 250°C, bonding them together. Alternatively, a low-melting point glass adhesive may be used, having a softening point around 250°C. A further embodiment uses a metal film formed on the junction surface of the main body substrate against which the semiconductor insert is pressed at a temperature of e.g. about 250°C, and with the application of several tens to several hundred volts between the two components. This achieves so-called anodic or voltage application bonding which uses electrostatic force to bond members having ion conductivity.

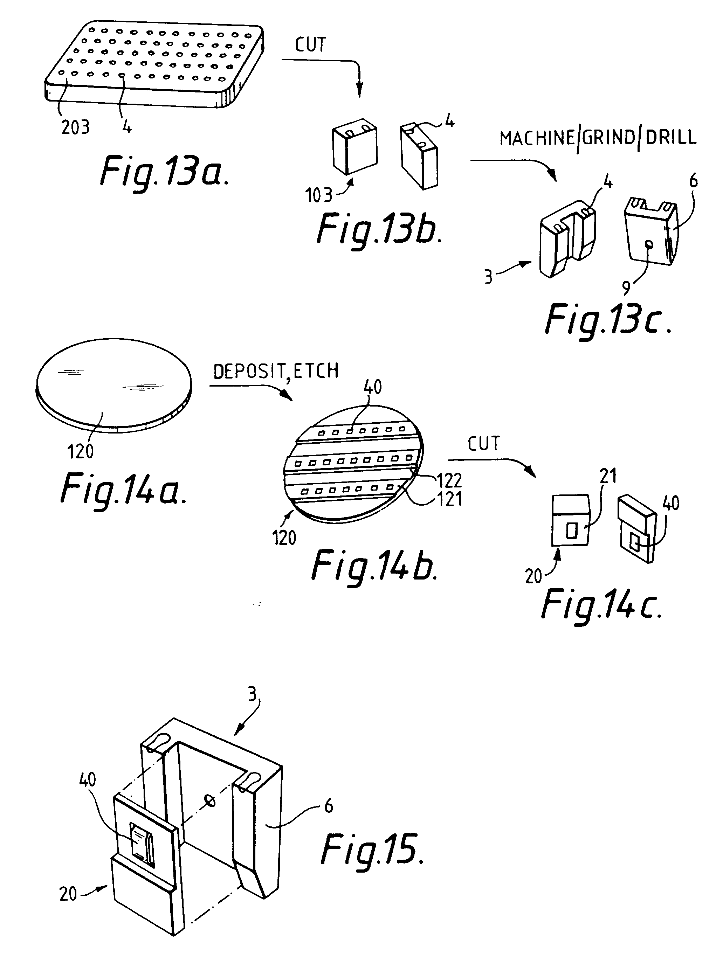

Figures 13 to 15 extend the concept to a mass-production method. Figure 13 shows schematically how a parent slab 203 of zirconia based ceramics is formed with an array of information recording or reproducing heads 4 which in themselves are conventional. The slab 203 is sub-divided to form a multiplicity of rectanguloid slider substrate precursors 103, each having a pair of the heads 4 as in the desired slider unit. Then, each of the precursors 103 is machined to form the desired channel-configuration with the side rails 6, shaped positive lift surfaces 12 and, if desired, the vent hole 9.

Figure 14 shows a circular standard wafer 120 of silicon or photosensitive glass. By etching and deposition techniques, the natures of which have been discussed above, an array of the desired controllably movable aerodynamic elements for adjusting the lift force is created on the wafer 120. In the example shown, elongated recesses 121 are created by etching, simultaneously forming step formations 122 at their edges. In these long recesses, an array of through-holes for venting is created by further etching. Using techniques already described, an array of controllable microvalves 40 is made by deposition and etching technique over each of the vent holes.

This prepared wafer can then be cut into a multiplicity of chips 20 of an appropriate size, each of which has the desired recess portion 21 and microvalve 40 formed thereon and which is ready to be inserted into a corresponding base substrate 3 from the process of Fig. 13, and bonded thereto by means described above. Since the fine components and particularly the adjusting microvalve 40 are formed on an insert 20 which is inserted bodily in the bonding process, the risk of damage to the microvalve is greatly reduced since it need not be contacted in the bonding process.

## Claims

1. A slider unit comprising a slider body (1) and a recording or reproducing head (4) for floating operation at the surface of an information recording medium (7) moving relative thereto, having a float side (10) which faces the surface of the medium (7) in use, whereby air movement between a float side (10) of the slider unit and the medium (7) causes a positive or negative lift force on the slider unit, said slider unit further comprising an aerodynamic element (40-90) which can be moved in a controllable fashion to adjust the said positive or negative lift force on the slider unit in response to information from a flying-height sensor (15), characterised in that
the slider body (1) also comprises an insert portion (20) of semiconductive material carrying said controllably movable aerodynamic element (40-90), integrally formed on said insert portion.

2. A slider unit according to claim 1 in which the slider body (1) has a recess (21) on the float side for generating a negative lift component, and the recess (21) is formed at least partially in the insert portion (20) of semiconductive material.

3. A slider unit according to claim 2 in which the insert portion (20) of semiconductive material has a transverse surface step (22) at a forward end of the recess (21).

4. A slider unit according to any of claims 1 to 3 in which a vent (9) communicates through the slider body (1) from the float side (10) and where the controllably movable aerodynamic element comprises a valve member (40-70) for the vent, said valve member being formed using the insert portion (20) of semiconductive material as a substrate.

5. A slider unit according to claim 4 in which the valve member (40-70) comprises at least one layer formed by deposition on the semiconductive substrate (20).

6. A slider unit according to claim 4 or 5 in which the valve member (40-70) forms a bridged or cantilevered structure across the opening of the vent.

7. A slider unit according to claims 4 to 6 in which the valve member (40-70) is located in a seating recess formed therefor in the substrate.

8. A slider unit according to any of claims 1 to 3 where the controllably movable aerodynamic element comprises a wing (80, 90) projecting in a rearward direction on the float side (10) and formed using the insert portion (20) of semiconductive material as a substrate.

9. A slider unit according to claim 8 in which the wing (80) projects rearwards over a step (22) defining the front of the recess (21).

10. A slider unit according to claim 8 in which the wing (90) projects rearwards over a second step (24) at the rear of the recess (21).

11. A slider unit according to any of claims 1 to 10 where the aerodynamic element (40-90) which can be moved in a controllable fashion to adjust the positive or negative lift force on the slider unit is moved piezoelectrically or electrostatically.

12. A slider unit according to any of claims 1 to 11 comprising a ceramics portion (3) with a central part (16) and side rails (6) which extend longitudinally along opposite edges of the central part and project to the float side (10), with an insert portion (20) of semiconductive material which is shaped on the float side to provide the controllably movable aerodynamic element (40-90), said insert portion being fixedly bonded to the ceramics portion (3) on the float side of the ceramics portion between the side rails (6) thereof.

13. A slider unit according to claim 12 in which the ceramics portion (3) comprises zirconia, titania or alumina ceramics, and the semiconductive portion (20) comprises a silicon or photosensitive glass substrate.

14. A slider unit according to any of claims 1 to 13 comprising a flying-height sensor (15).

15. An information recording or reproducing device comprising a slider unit according to any of claims 1 to 14 mounted on an arm (5), and means (8) for driving an information recording medium (7) adjacent to the float side (10) of the slider unit.

16. A method of making a slider unit which has a slider body (1) and a recording or reproducing head (4), for floating operation at the surface of an information recording medium (7) moving relative thereto, having a float side (10) which faces the surface of the medium (7) in use, whereby air movement between a float side (10) of the slider unit and the medium (7) causes a positive or negative lift force on the slider unit, said slider unit further comprising an aerodynamic element (40-90) which can be moved in a controllable fashion to adjust the said positive or negative lift force on the slider unit in response to information from a flying-height sensor (15), the method being characterised by
forming the controllably movable aerodynamic element (40-90) on a portion (20) of semiconductive material inserted onto the slider body.

17. A method according to claim 16 comprising forming the controllably movable aerodynamic element (40-90) by steps including thin film deposition on the semiconductive substrate (20), and etching.

18. A method according to claim 16 or 17 comprising etching a transverse step (22) in the semiconductive substrate (20) to form a recess (21) for generating a negative lift component on the resulting slider unit.

19. A method of making a plurality of slider units each made according to any of claims 16 to 18, the method comprising forming an array of the said controllably movable aerodynamic elements (40-90) on a parent piece (120) of semiconductive material, sub-dividing the parent piece (120) into a plurality of portions (20) of semiconductive material, each having a controllably movable aerodynamic element (40-90), and fixing the respective portions of semiconductive material to respective base substrates (3) to make the said slider bodies (1).

20. A method according to claim 19 in which the base substrates (3) are made according to a method comprising forming an array of recording or reproducing heads (4) on a parent piece (203) of base substrate material, sub-dividing the parent piece (203) into a plurality of portions (103) of base substrate material, and shaping the portions into base substrates.

21. A method according to any of claims 16 to 20 in which the controllably movable aerodynamic element (40-90) comprises a piezoelectric unimorph or bimorph, or an electrostatic actuator.

22. A method according to any of claims 16 to 21 in which the portion (20) of semiconductive material is fixed to the base substrate (3) by brazing or by anodic bonding.

## Patentansprüche

1. Läufervorrichtung enthaltend einen Läuferkörper (1) und einen Aufzeichnungs- oder Wiedergabekopf (4) für den schwebenden Betrieb an der Oberfläche eines sich hierzu bewegenden Datenaufzeichnungsmediums (7) mit einer Schwebeseite (10), die beim Betrieb der Oberfläche des Mediums (7) gegenübersteht, wodurch eine Luftbewegung zwischen einer Schwebeseite (10) der Läufervorrichtung und dem Medium (7) eine positive oder negative Auftriebskraft auf die Läufervorrichtung ausübt, wobei die Läufervorrichtung weiterhin ein aerodynamisches Element (40-90) enthält, das zur Regulierung der positiven oder negativen Auftriebskraft auf die Läufervorrichtung abhängig von Daten aus einem Flughöhensensor (15) steuerbar bewegt werden kann, dadurch gekennzeichnet, daß
der Läuferkörper (1) weiterhin ein Einsatzstück (20) aus Halbleitermaterial enthält, welches das steuerbar bewegliche aerodynamische Element (40-90) trägt, das integriert auf dem Einsatzstück ausgebildet ist.

2. Läufervorrichtung nach Anspruch 1, bei welcher der Läuferkörper (1) zur Erzeugung einer negativen Komponente der Auftriebskraft auf der Schwebeseite eine Ausnehmung (21) aufweist und die Ausnehmung (21) wenigstens teilweise im Einsatzstück (20) aus Halbleitermaterial gebildet ist.

3. Läufervorrichtung nach Anspruch 2, bei welcher das Einsatzstück (20) aus Halbleitermaterial an einem vorderen Ende der Ausnehmung (21) eine in Querrichtung verlaufende Oberflächenstufe (22) aufweist.

4. Läufervorrichtung nach einem der Ansprüche 1 bis 3, bei welcher ein Luftloch (9) von der Schwebeseite (10) durch den Läuferkörper (1) hindurchtritt und bei welcher das steuerbar bewegliche aerodynamische Element ein Ventilglied (40-70) für das Luftloch enthält, wobei dieses Ventilglied unter Verwendung des Einsatzstücks (20) aus Halbleitermaterial als Substrat gebildet ist.

5. Läufervorrichtung nach Anspruch 1, bei welcher das Ventilglied (40-70) wenigstens eine durch Abscheiden auf dem Halbleitermaterial (20) gebildete Schicht aufweist.

6. Läufervorrichtung nach Anspruch 4 oder 5, bei welcher das Ventilglied (40-70) eine über dem Luftloch angeordnete brükkenförmige oder freitragende Vorrichtung bildet.

7. Läufervorrichtung nach den Ansprüchen 4 bis 6, bei welcher sich das Ventilglied (40-70) in einer dazu im Substrat gebildeten, als Sitzfläche dienenden Ausnehmung befindet.

8. Läufervorrichtung nach einem der Ansprüche 1 bis 3, bei welcher das steuerbar bewegliche aerodynamische Element einen auf der Schwebeseite (10) in Rückwärtsrichtung vorstehenden Flügel (80, 90) enthält, der unter Verwendung des Einsatzstücks (20) aus Halbleitermaterial als Substrat gebildet ist.

9. Läufervorrichtung nach Anspruch 8, bei welcher der Flügel (80) rückwärtsgerichtet über eine Stufe (22) vorsteht, die die Vorderseite der Ausnehmung (21) festlegt.

10. Läufervorrichtung nach Anspruch 8, bei welcher der Flügel (90) rückwärtsgerichtet über eine zweite Stufe (24) an der Hinterseite der Ausnehmung (21) vorsteht.

11. Läufervorrichtung nach einem der Ansprüche 1 bis 10, bei welcher das aerodynamische Element (40-90), das zur Regulierung der positiven oder negativen Auftriebskraft auf die Läufervorrichtung steuerbar beweglich ist, piezoelektrisch oder elektrostatisch bewegt wird.

12. Läufervorrichtung nach einem der Ansprüche 1 bis 11, enthaltend ein Keramikteil (3) mit einem Mittelstück (16) und Seitenschienen (6), die längsseits entlang gegenüberliegender Kanten des Mittelstücks verlaufen und zur Schwebeseite (10) hin vorstehen, mit einem Einsatzstück (20) aus Halbleitermaterial, das auf der Schwebeseite gebildet ist und das steuerbar bewegliche aerodynamische Element (40-90) bildet, wobei das Einsatzstück auf der Schebeseite des Keramikteils zwischen deren Seitenschienen (6) fest mit dem Keramikteil (3) verbunden ist.

13. Läufervorrichtung nach Anspruch 12, bei welcher das Keramikteil (3) eine Zirkonoxid-, eine Titanoxid- oder eine Aluminiumoxid-Keramik enthält und das Halbleiterstück (20) ein Substrat aus Silizium oder photoempfindlichem Glas enthält.

14. Läufervorrichtung nach einem der Ansprüche 1 bis 13, enthaltend einen Flughöhensensor (15).

15. Datenaufzeichnungs- oder -wiedergabegerät, enthaltend eine an einem Arm (5) befestigte Läufervorrichtung nach einem der Ansprüche 1 bis 14 sowie eine an die Schwebeseite (10) der Läufervorrichtung angrenzende Einrichtung (8) zum Ansteuern eines Datenaufzeichnungsmediums (7).

16. Verfahren zur Herstellung einer Läufervorrichtung, welche einen Läuferkörper (1) und einen Aufzeichnungs- oder Wiedergabekopf (4) für den schwebenden Betrieb an der Oberfläche eines sich hierzu bewegenden Datenaufzeichnungsmediums (7) aufweist und welche eine Schwebeseite (10) aufweist, die beim Betrieb der Oberfläche des Mediums (7) gegenübersteht, wodurch eine Luftbewegung zwischen einer Schwebeseite (10) der Läufervorrichtung und dem Medium (7) eine positive oder negative Auftriebskraft auf die Läufervorrichtung ausübt, wobei die Läufervorrichtung weiterhin ein aerodynamisches Element (40-90) enthält, das zur Regulierung der positiven oder negativen Auftriebskraft auf die Läufervorrichtung abhängig von Daten aus einem Flughöhensensor (15) steuerbar bewegt werden kann, wobei das Verfahren dadurch gekennzeichnet ist, daß
das steuerbar bewegliche aerodynamische Element (40-90) auf einem auf der Läufervorrichtung eingesetzten Stück (20) aus Halbleitermaterial hergestellt wird.

17. Verfahren nach Anspruch 16, welches die Herstellung des steuerbar beweglichen aerodynamischen Elementes (40-90) durch Schritte einschließt, die eine Dünnschichtaufbringung auf das Halbleitersubstrat (20) sowie Ätzen enthalten.

18. Verfahren nach Anspruch 16 oder 17, welches das Ätzen einer in Querrichtung verlaufende Stufe (22) in dem Halbleitersubstrat (20) zur Bildung einer Ausnehmung (21) für die Erzeugung einer negativen Komponente der Auftriebskraft auf die sich ergebende Läufervorrichtung enthält.

19. Verfahren zur Herstellung mehrerer nach einem der Verfahren 16 bis 18 hergestellter Läufervorrichtungen, wobei das Verfahren das Bilden einer Matrix aus den steuerbar beweglichen aerodynamischen Elementen (40-90) auf einem Ausgangsstück (120) aus Halbleitermaterial, das Unterteilen des Ausgangsstücks (120) in mehrere Teilstücke (20) aus Halbleitermaterial, wobei jedes ein steuerbar bewegliches aerodynamisches Element (40-90) aufweist, sowie das Befestigen der jeweiligen Teilstücke aus Halbleitermaterial an jeweiligen Basissubstraten (3) zur Herstellung der Läuferkörper (1) enthält.

20. Verfahren nach Anspruch 19, bei welchem die Basissubstrate (3) nach einem Verfahren hergestellt sind, die das Bilden einer Matrix aus Aufzeichnungs- oder Wiedergabeköpfen (4) auf einem Ausgangsstück (203) aus dem Material des Basissubstrats, das Unterteilen des Ausgangsstücks (203) in mehrere Teilstücke (103) aus dem Material des Basissubstrats, sowie das Formen der Teilstücke zu Basissubstraten enthält.

21. Verfahren nach einem der Ansprüche 16 bis 20, bei welchem das steuerbar bewegliche aerodynamische Element (40-90) ein piezoelektrisches unimorphes oder bimorphes Stellglied oder ein elektrostatisches Stellglied aufweist.

22. Verfahren nach einem der Ansprüche 16 bis 21, bei welchem das Teilstück (20) aus Halbleitermaterial durch Hartlöten oder durch anodisches Verbinden am Basissubstrat (3) befestigt wird.

## Revendications

1. Unité de patin comprenant un corps de patin (1) et une tête d'enregistrement ou de reproduction (4) pour un fonctionnement flottant à la surface d'un support d'enregistrement d'informations (7) se déplaçant par rapport à la tête, comportant un côté flottant (10) qui, en fonctionnement, est situé en vis-à-vis de la surface du support (7), un déplacement d'air entre un côté flottant (10) de l'unité de patin et le support (7) provoquant l'application d'une force de portance positive ou négative à l'unité de patin, ladite unité de patin comprenant en outre un élément aérodynamique (40-90), qui peut être déplacé d'une manière commandable pour ajuster ladite force de portance positive ou négative sur l'unité de patin en réponse à une information délivrée par un capteur de hauteur de vol (15), caractérisée en ce que
le corps de patin (11) comprend également une partie formant insert (20) réalisée en un matériau semiconducteur et portant ledit élément aérodynamique (40-90) déplaçable d'une manière commandable et formé d'un seul tenant sur ladite partie formant insert.

2. Unité de patin selon la revendication 1, dans laquelle le corps de patin (1) possède un renfoncement (21) sur le côté flottant pour produire une composante de portance négative, et le renfoncement (21) est formé au moins partiellement dans la partie formant insert (20) en matériau semiconducteur.

3. Unité de patin selon la revendication 2, dans laquelle la partie formant insert (20) en matériau semiconducteur possède une surface transversale en décrochement (22) au niveau d'une extrémité avant du renfoncement (21).

4. Unité de patin selon l'une quelconque des revendications 1 à 3, dans laquelle un évent (9) traverse le corps de patin (1) à partir du côté flottant (10) et dans laquelle l'élément aérodynamique déplaçable d'une manière commandable comprend un élément de soupape (40-70) pour l'évent, ledit élément de soupape étant formé moyennant l'utilisation de la partie formant insert (20) du matériau semiconducteur en tant que substrat.

5. Unité de patin selon la revendication 4, dans laquelle l'élément de soupape (40-70) comprend au moins une couche formée par dépôt sur le substrat semiconducteur (20).

6. Unité de patin selon la revendication 4 ou 5, dans laquelle l'élément de soupape (40-70) forme une structure en pont ou en console en travers de l'ouverture de l'évent.

7. Unité de patin selon les revendications 4 à 6, dans laquelle l'élément de soupape (40-70) est situé dans un renfoncement d'appui formé à cet effet dans le substrat.

8. Unité de patin selon l'une quelconque des revendications 1 à 3, dans laquelle l'élément aérodynamique déplaçable d'une manière commandable comprend une aile (80, 90) qui fait saillie dans une direction arrière sur le côté flottant (10) et est formée moyennant l'utilisation de la partie formant insert (20) en matériau semiconducteur, en tant que substrat.

9. Unité de patin selon la revendication 8, dans laquelle l'aile (80) fait saillie vers l'arrière au-dessus d'un décrochement (22) définissant l'avant du renfoncement (21).

10. Unité de patin selon la revendication 8, dans laquelle l'aile (90) fait saillie vers l'arrière au-dessus d'un second décrochement (24) à l'arrière du renfoncement (21).

11. Unité de patin selon l'une quelconque des revendications 1 à 10, dans laquelle l'élément aérodynamique (40-90), qui peut être déplacé d'une manière commandable pour ajuster la force de portance positive ou négative sur l'unité de patin est déplacé par voie piézoélectrique ou électrostatique.

12. Unité de patin selon l'une quelconque des revendications 1 à 11, comprenant une partie céramique (3) pourvue d'une partie centrale (16) et de rails latéraux (6), qui s'étendent longitudinalement le long de bords opposés de la partie centrale et font saillie en direction du côté flottant (10), une partie formant insert (20) réalisée en un matériau semiconducteur et qui est profilée sur le côté flottant de manière à constituer l'élément aérodynamique (40-90) déplaçable d'une manière commandable, ladite partie formant insert étant réunie de façon fixe à la partie céramique (3) sur le côté flottant de la partie céramique entre les rails latéraux (6) de cette dernière.

13. Unité de patin selon la revendication 12, dans laquelle la partie céramique (3) comprend une céramique à base de zircone, d'oxyde de titane ou d'alumine, et la partie semiconductrice (20) comprend un substrat en silicium ou en verre photosensible.

14. Unité de patin selon l'une quelconque des revendications 1 à 13, comprenant un capteur de hauteur de vol (15).

15. Dispositif d'enregistrement et de reproduction d'informations comprenant une unité de patin selon l'une quelconque des revendications 1 à 14, montée sur un bras (5), et des moyens (8) pour entraîner un support d'enregistrement d'informations (7) au voisinage du côté flottant (10) de l'unité de patin.

16. Procédé pour fabriquer une unité de patin qui possède un corps de patin (1) et une tête d'enregistrement ou de reproduction (4) pour un fonctionnement flottant à la surface d'un support d'enregistrement d'informations (7) se déplaçant par rapport à la tête, comportant un côté flottant (10) qui, en fonctionnement, est situé en vis-à-vis de la surface du support (7), un déplacement d'air entre un côté flottant (10) de l'unité de patin et le support (7) provoquant l'application d'une force de portance positive ou négative à l'unité de patin, ladite unité de patin comprenant en outre un élément aérodynamique (40-90), qui peut être déplacé d'une manière commandable pour ajuster ladite force de portance positive ou négative sur l'unité de patin en réponse à une information délivrée par un capteur de hauteur de vol (15), le procédé étant caractérisé en ce
qu'on forme l'élément aérodynamique (40-90) déplaçable d'une manière commandable sur une partie (20) en matériau semiconducteur insérée sur le corps de patin.

17. Procédé selon la revendication 16, dans lequel on forme l'élément aérodynamique (40-90) déplaçable d'une manière commandable, au moyen d'étapes incluant le dépôt d'une pellicule mince sur le substrat semiconducteur (20) et une corrosion.

18. Procédé selon la revendication 16 ou 17, dans lequel on forme par corrosion un décrochement transversal (22) dans le substrat semiconducteur (20) pour former un renfoncement (21) pour produire une composante de portance négative sur l'unité de patin résultante.

19. Procédé pour fabriquer une pluralité d'unités de patins constituées chacune selon l'une quelconque des revendications 16 à 18, le procédé consistant à former un réseau desdits éléments aérodynamiques (40-90) déplaçables de façon commandable sur une pièce de départ (120) en matériau semiconducteur, diviser la pièce de départ (120) en une pluralité de parties (20) en matériau semiconducteur, dont chacune possède un élément aérodynamique (40-90) déplaçable d'une manière commandable, et fixer les parties respectives en matériau semiconducteur aux substrats de base respectifs (3) pour former lesdits corps de patin (1).

20. Procédé selon la revendication 19, dans lequel les substrats de base (3) sont réalisés selon un procédé consistant à former un réseau de têtes d'enregistrement ou de reproduction (4) sur une pièce de départ (203) en matériau de base du substrat, diviser la pièce de départ (203) en une pluralité de parties (103) en matériau de base du substrat, et conformer les parties sous la forme de substrats de base.

21. Procédé selon l'une quelconque des revendications 16 à 20, dans lequel l'élément aérodynamique (40-90) déplaçable d'une manière commandable comprend un élément piézoélectrique unimorphe ou bimorphe ou un actionneur électrostatique.

22. Procédé selon l'une quelconque des revendications 16 à 21, dans lequel on fixe la partie (20) en matériau semiconducteur au substrat de base (3) par brasage ou par liaison anodique.
